# EUROPÄISCHE PATENTSCHRIFT

(11) **EP 3 055 165 B1**
(45) Veröffentlichungstag und Bekanntmachung des Hinweises auf die Patenterteilung: **01.09.2021**
(21) Anmeldenummer: 14783649.8
(22) Anmeldetag: 13.10.2014
(51) Int. Cl.: B60Q 1/04, B62D 65/16

(54) **VERFAHREN ZUM MONTIEREN EINES FRONTENDMODULS UND EINES FRONTSCHEINWERFERS AN EINER KAROSSERIE EINES PERSONENKRAFTWAGENS SOWIE HALTEANORDNUNG EINES FRONTSCHEINWERFERS AN EINEM FRONTENDMODUL**
METHOD FOR MOUNTING A FRONT-END MODULE AND A FRONT HEADLAMP ON A BODY OF A PASSENGER CAR AND HOLDING ARRANGEMENT FOR HOLDING A FRONT HEADLAMP ON A FRONT-END MODULE
PROCÉDÉ PERMETTANT LE MONTAGE D'UN MODULE D'EXTRÉMITÉ AVANT ET D'UN PROJECTEUR AVANT SUR LA CARROSSERIE D'UNE VOITURE ET ENSEMBLE DE RETENUE D'UN PROJECTEUR AVANT SUR UN MODULE D'EXTRÉMITÉ AVANT

(30) Priorität: 11.10.2013 DE 102013220574
(43) Veröffentlichungstag der Anmeldung: 17.08.2016
(73) Patentinhaber: Bayerische Motoren Werke Aktiengesellschaft, 80809 München (DE)
(72) Erfinder: KANDLBINDER, Josef, 94151 Mauth (DE); LEIDENBERGER, Manfred, 80933 Muenchen (DE)
(86) Internationale Anmeldenummer: PCT/EP2014/071884
(87) Internationale Veröffentlichungsnummer: WO 2015/052343

(56) Entgegenhaltungen:
- EP-A1- 1 481 878
- EP-A2- 1 977 957
- EP-A2- 2 221 217
- DE-A1- 19 946 995
- DE-A1-102006 054 720
- DE-A1-102008 000 238
- DE-B3-102006 039 627
- DE-T2- 60 000 006

## Beschreibung

Die Erfindung betrifft ein Verfahren zum Montieren eines Frontendmoduls und eines Frontscheinwerfers an einer Karosserie eines Personenkraftwagens sowie eine Halteanordnung eines Frontscheinwerfers an einem Frontendmodul eines Personenkraftwagens.

Frontendmodule für Personenkraftwagen sind aus dem allgemeinen Stand der Technik, beispielsweise von der BMW 5er Baureihe bekannt. Ein solches Frontendmodul umfasst beispielsweise wenigstens einen Träger, welcher mit Anbauteilen, beispielsweise mit Frontscheinwerfern des Personenkraftwagens, bestückt ist. Das Frontendmodul mit den Anbauteilen kann somit als Modulbauteil zumindest im Wesentlichen zeitgleich zum übrigen Personenkraftwagen, beispielsweise zu dessen Karosserie, gefertigt beziehungsweise vormontiert und schließlich als vormontiertes Modulbauteil an der Karosserie montiert beziehungsweise mit dieser gefügt werden.

Beim Anordnen des Modulbauteils (des Frontendmoduls mit den Frontscheinwerfern) an der Karosserie spielt die Ausrichtung, das heißt die Positionierung der Frontscheinwerfer relativ zum Frontendmodul und relativ zur Karosserie und somit relativ zu an der Karosserie gegebenenfalls angeordneten Beplankungsteilen eine wichtige Rolle, um ein zumindest im Wesentlichen gleichmäßiges und somit optisch ansprechendes Fugenbild zu realisieren. Bei den Beplankungsteilen kann es sich beispielsweise um sogenannte Seitenwände, insbesondere Kotflügel, handeln, wobei durch die Kotflügel einerseits und die Frontscheinwerfer andererseits jeweilige Fugen begrenzt werden. Weitere Fugen können beispielsweise zwischen den Frontscheinwerfern und einer Stoßfängerverkleidung des Frontendmoduls und/oder zwischen den Frontscheinwerfern und einer Fronthaube in deren Schließstellung vorgesehen sein. Zur Realisierung eines gewünschten und insbesondere zumindest im Wesentlichen konstanten Spaltmaßes dieser Fugen sind die Frontscheinwerfer relativ zu den genannten Bauteilen (Kotflügel, Stoßfänger, Fronthaube) und somit relativ zur Karosserie entsprechend auszurichten.

Die Ausrichtung der Frontscheinwerfer erfolgt üblicherweise derart, dass die Frontscheinwerfer mittels einer komplexen Lehre relativ zum Frontendmodul positioniert und mittels Toleranzausgleichselementen am Frontendmodul festgelegt werden. Schließlich wird der Zusammenbau aus Frontendmodul und Frontscheinwerfern mit der Karosserie gefügt, wobei dieses Fügen üblicherweise in Fahrzeuglängsrichtung (x-Richtung) erfolgt. Aufgrund von insbesondere fertigungsbedingten Toleranzen kommt es zu Versätzen zwischen den Frontscheinwerfern und der Karosserie beziehungsweise den Kotflügeln, so dass sich das gewünschte Fugenbild bei der Montage des Frontendmoduls mit den Frontscheinwerfern an der Karosserie nicht ohne weiteres einstellt. Aufgrund dieser Toleranzen kann es beim Fügen des genannten Zusammenbaus mit der Karosserie im Fugenbereich beispielsweise zwischen den Frontscheinwerfern und den bereits an der Karosserie angeordneten Kotflügeln zu einer Krafteinleitung in die Frontscheinwerfer kommen, so dass diese aus ihrer mittels der Lehre eingestellten Position bewegt, beispielsweise gedreht werden. Dieses Verdrehen beeinträchtigt sowohl das erwünschte Spaltmaß zwischen den Frontscheinwerfern und den Kotflügeln als auch gegebenenfalls andere Spaltmaße beispielsweise zwischen den Frontscheinwerfern und einem Ziergitter, der Stoßfängerverkleidung und/oder der Motorhaube.

Um nun beim fertig hergestellten Personenkraftwagen ein erwünschtes Spaltmaß beziehungsweise Fugenbild einzustellen, sind nach dem Fügen des Zusammenbaus mit der Karosserie zeit- und kostenaufwändige Einstellarbeiten erforderlich.

Die EP 2 298 600 A1 zeigt ein Verfahren zur Ausrichtung eines Scheinwerfers an einem Fahrzeug, wobei der Scheinwerfer durch einen Haltearm aufgenommen wird, der an einem Montageträger eines Frontendmoduls befestigt ist. Der Montageträger wird an einem Strukturbauteil der Fahrzeugkarosserie montiert. Bei der Endmontage wird ein sich an den Haltearm anschließendes elastisches Element mittels eines werkzeugbetätigbaren Einstellelementes derart verformt, dass der Haltearm in einer vorgegebenen Verstellrichtung bewegt wird, bis der Scheinwerfer eine Verstellposition mit einem vorgegebenen Fugenverlauf zu einem benachbarten Seitenteil der Karosserie einnimmt, wobei danach der Haltearm in dieser Verstellposition zumindest bezüglich der Verstellrichtung fixiert wird. Zwar kann ein bestimmtes Fugenbild mittels des Verfahrens erzielt werden, jedoch muss ein Werkzeug zur Betätigung des Einstellelements eingesetzt werden. Dadurch muss eine entsprechende Zugänglichkeit zu dem Einstellelement bei an der Karosserie angeordnetem Frontendmodul gegeben sein, da sonst der Scheinwerfer gar nicht justiert werden kann.

Ferner ist aus der DE 199 46 995 A1 ein Verfahren mit den im Oberbegriff des Anspruchs 1 genannten Schritten a) bis c) bekannt, ebenso wie eine Halteanordnung gemäß dem Oberbegriff des Anspruchs 3.

Es ist daher Aufgabe der vorliegenden Erfindung, ein Verfahren zum Montieren eines Frontendmoduls und eines Frontscheinwerfers an einer Karosserie eines Personenkraftwagens sowie eine Halteanordnung eines Frontscheinwerfers an einem Frontendmodul zu schaffen, mittels welchen der Frontscheinwerfer auf einfache, zeit- und kostengünstige Weise relativ zum Frontendmodul und/oder relativ zur Karosserie ausgerichtet beziehungsweise positioniert werden kann.

Diese Aufgabe wird durch ein Verfahren mit den Merkmalen des Patentanspruchs 1 sowie durch eine Halteanordnung mit den Merkmalen des Patentanspruchs 3 gelöst. Vorteilhafte Ausgestaltungen mit zweckmäßigen und nicht-trivialen Weiterbildungen der Erfindung sind in den übrigen Ansprüchen angegeben.

Ein erster Aspekt der Erfindung betrifft ein Verfahren zum Montieren eines Frontendmoduls und wenigstens eines Frontscheinwerfers an einer Karosserie eines Personenkraftwagens. Das Verfahren umfasst einen Schritt a), in welchem der Frontscheinwerfer in wenigstens einer Vormontageposition an dem Frontendmodul über eine Haltevorrichtung gehaltert wird. Dabei ist der Frontscheinwerfer mittels der Haltevorrichtung am Frontendmodul relativ zu diesem bewegbar gehalten. Mit anderen Worten ist der Frontscheinwerfer zwar an dem Frontendmodul mittels der Haltevorrichtung gehalten, jedoch kann der Frontscheinwerfer noch relativ zum Frontendmodul bewegt werden.

Das Verfahren umfasst einen Schritt b), in welchem das Frontendmodul zusammen mit dem an dem Frontendmodul über die Haltevorrichtung relativ zum Frontendmodul bewegbar gehaltenen Frontscheinwerfer an der Karosserie angeordnet wird, wobei das Frontendmodul und mit diesem der Frontscheinwerfer relativ zur Karosserie bewegt werden. Auch hierbei ist der Frontscheinwerfer noch relativ zum Frontendmodul und relativ zur Karosserie bewegbar. Dadurch kann mit der Anordnung des Frontendmoduls und des Frontscheinwerfers an der Karosserie eine Ausrichtung des Frontscheinwerfers relativ zum Frontendmodul und relativ zur Karosserie einhergehen. Hierbei kann sich der Frontscheinwerfer relativ zum Frontendmodul bewegen bzw. kann der Frontscheinwerfer beispielsweise durch eine die Montage durchführende Person bewegt werden, wobei er von der Person geführt werden kann, damit der Frontscheinwerfer schließlich in seine Endmontageposition bewegt werden kann.

In einem weiteren Schritt c) des Verfahrens wird der über die Haltevorrichtung am Frontendmodul gehaltene Frontscheinwerfer schließlich in seiner Endmontagestellung festgelegt. Das erfindungsgemäße Verfahren ermöglicht die einfache, zeit- und kostengünstige Ausrichtung des Frontscheinwerfers relativ zum Frontendmodul und relativ zur Karosserie, da sich der Frontscheinwerfer zunächst noch relativ zum Frontendmodul und zur Karosserie bewegen kann. Hierdurch kann beim Montieren des Frontendmoduls und des Frontscheinwerfers an der Karosserie eine Justierung beziehungsweise Zentrierung des Frontscheinwerfers stattfinden, wobei er beispielsweise durch wenigstens ein an der Karosserie gehaltenes Bauteil, welches in Kontakt mit dem Frontscheinwerfer kommt, aus seiner Vormontageposition in eine davon unterschiedliche Position, insbesondere in die Endmontageposition, bewegt wird beziehungsweise bewegt werden kann. Da bereits beim Montieren des Frontendmoduls und des Frontscheinwerfers an der Karosserie diese erwünschte Ausrichtung des Frontscheinwerfers erfolgt, können zeit- und kostenaufwändige Einstellarbeiten zum Ausrichten des Frontscheinwerfers vermieden werden. Vorzugsweise erfolgt der Schritt c) zeitlich nach dem Schritt b), so dass die Festlegung des Frontscheinwerfers nicht mehr gelöst werden muss, um diesen ausrichten zu können.

Im Rahmen des Verfahrens wird der Frontscheinwerfer beispielsweise im Zuge der Vormontage über die Haltevorrichtung am Frontendmodul maßhaltig in Fahrzeughochrichtung (z-Richtung) und in Fahrzeuglängsrichtung (x-Richtung) eingehängt. Hierbei ist der Frontscheinwerfer zum Beispiel an zwei Punkten in x-Richtung und an einem Punkt in z-Richtung festgelegt, so dass zunächst drei von insgesamt sechs Freiheitsgraden eingeschränkt sind. Das Einhängen erfolgt beispielsweise über sich in Fahrzeugquerrichtung erstreckende Langlöcher der Haltevorrichtung, so dass der Frontscheinwerfer in diesem Zustand noch in Fahrzeugquerrichtung (y-Richtung) verschoben, um die x-Richtung verkippt bzw. verschwenkt und um die z-Richtung verschwenkt werden kann.

Um den Frontscheinwerfer in diesem Zustand, beispielsweise von der Vormontage in die Endmontage, zu transportieren, kann wenigstens eine Transportsicherung verwendet werden, mittels welcher die Bewegung des Frontscheinwerfer relativ zum Frontendmodul begrenzt wird. Der Frontscheinwerfer kann sich noch geringfügig relativ zum Frontendmodul bewegen, jedoch ist ein vollständiges Lösen vom Frontendmodul verhindert, so dass das Frontendmodul zusammen mit dem Frontscheinwerfer sicher transportiert werden kann. Die Transportsicherung wirkt somit als Verliersicherung.

Als Transportsicherung kann vorgesehen sein, dass eine erste Wandung des Frontendmoduls teilweise in einer Ausnehmung einer zweiten Wandung des Frontscheinwerfers aufgenommen ist. Alternativ oder zusätzlich kann vorgesehen sein, dass die Wandungen jeweils eine Aufnahmeöffnung, insbesondere eine Durchgangsöffnung aufweisen, wobei ein Formschlusselement, beispielsweise ein Stift, in die Aufnahmeöffnung eingreift. Dadurch ist die Bewegung des Frontscheinwerfers formschlüssig begrenzt.

Nach dem Transport kann der Stift entfernt bzw. die Transportsicherung aufgehoben werden, so dass der Frontscheinwerfer wieder über einen großen Bereich relativ zum Frontendmodul bewegt und im Rahmen der Montage ausgerichtet werden kann.

Da - wie oben beschrieben - erst drei von sechs Freiheitsgraden eingeschränkt sind, könnte der Frontscheinwerfer noch in z-Richtung nach oben bewegt werden. Im Rahmen der Montage wird dieser Freiheitsgrad ebenfalls beispielsweise mittels wenigstens zweier zusammenwirkender Ausrichtelemente eingeschränkt, so dass vier von sechs Freiheitsgraden eingeschränkt sind.

Um die Verschwenkbarkeit des Frontscheinwerfers um die z-Richtung einzuschränken, wird der Frontscheinwerfer in einem dritten Punkt in x-Richtung festgelegt. Dies erfolgt beispielsweise über eine am Frontscheinwerfer vorgesehene Dichtung und/oder Ausrichtelement, die bzw. das mit der Karosserie oder mit einem an der Karosserie festgelegten Bauteil zusammenwirken kann. Alternativ erfolgt diese Einschränkung bzw. Festlegung über wenigstens ein Hilfsmittel bzw. Hilfselement, das an der Karosserie und/oder am Frontendmodul festgelegt sein kann.

In diesem Zustand sind fünf von sechs Freiheitsgraden eingeschränkt. Der Frontscheinwerfer könnte in diesem Zustand lediglich noch in y-Richtung verschoben werden. Um nun dieses Verschieben zu vermeiden, erfolgt eine Einschränkung des sechsten und damit letzten Freiheitsgrades. Dies kann - wie auch die übrigen Festlegungen bzw. Einschränkungen der Freiheitsgrade - produktseitig, d.h. mittels wenigstens eines am Frontscheinwerfer vorgesehenen Elements und mittels wenigstens eines damit zusammenwirkenden Elements erfolgen, welches direkt an der Karosserie oder an einem an der Karosserie festgelegten Bauteil angeordnet ist.

Alternativ oder zusätzlich kann die jeweilige Einschränkung mittels wenigstens eines Hilfsmittels bzw. Hilfselements erfolgen, welcher zumindest mittelbar an der Karosserie festgelegt ist. Das Hilfselement kann direkt an der Karosserie oder an einem an der Karosserie festlegten Anbauteil, beispielsweise einem Beplankungselement oder dem Frontendmodul, befestigt sein. Sind die sechs Freiheitsgrade eingeschränkt, so ist der Frontscheinwerfer in seiner Endmontagestellung am Frontendmodul und somit relativ zur Karosserie festgelegt bzw. fixiert.

Erfindungsgemäß wird zudem in Schritt b) wenigstens ein am Frontscheinwerfer vorgesehenes, erstes Ausrichtelement mit einem der Karosserie des Personenkraftwagens zugeordneten, zweiten Ausrichtelement in Zusammenwirken gebracht, wobei der Frontscheinwerfer mittels der zusammenwirkenden Ausrichtelemente beim Bewegen des Frontscheinwerfers relativ zur Karosserie in eine Endmontageposition, relativ zur Karosserie und relativ zum Frontendmodul bewegt wird.

Mittels der miteinander zusammenwirkenden Ausrichtelemente wird der Frontscheinwerfer besonders präzise relativ zur Karosserie und relativ zum Frontendmodul ausgerichtet, so dass Toleranzen und toleranzbedingte Versätze ausgeglichen und Fugen mit besonders geringen Spaltmaßen ohne aufwändige Nacharbeitung realisiert werden können.

Im Gegensatz zu dem in der EP 2 298 600 A1 gezeigten Ausrichtungsverfahren eines Frontendmoduls ergibt sich vor allem der Vorteil, dass der Frontscheinwerfer aufgrund der miteinander zusammenwirkenden Ausrichtelemente ohne den Einsatz von weiteren Werkzeugen, also werkzeuglos, relativ zur Karosserie und zum Frontendmodul ausgerichtet und in seine Endmontageposition verbracht werden kann. Zur Positionierung des Frontscheinwerfers in seine Endmontageposition müssen somit keinerlei Werkzeuge, wie beispielsweise Drehwerkzeuge in Form von Schraubendrehern oder dergleichen, eingesetzt werden. Folglich muss auch keine Zugänglichkeit mittels Werkzeugen zu eventuellen Einstell- oder Justagelementen vorgesehen werden, wenn das Frontendmodul an der Karosserie angebracht worden ist. Das Frontendmodul, der Scheinwerfer und die Karosserie müssen lediglich derart ausgebildet sein, dass die Ausrichtelemente in Zusammenwirken gebracht werden können, sodass der Frontscheinwerfer mittels der zusammenwirkenden Ausrichtelemente beim Bewegen des Frontscheinwerfers relativ zur Karosserie in eine Position, insbesondere in die Endmontageposition, relativ zur Karosserie und relativ zum Frontendmodul bewegt werden kann.

Beim Anordnen des Frontendmoduls zusammen mit dem an diesem über die Haltevorrichtung relativ zum Frontendmodul bewegbar gehaltenen Frontscheinwerfer an der Karosserie erfolgt aufgrund des Zusammenwirkens der Ausrichtelemente also zwangsläufig eine Ausrichtung des Frontscheinwerfers in seine Endmontageposition relativ zur Karosserie und relativ zum Frontendmodul. Beispielsweise muss lediglich noch ein Werker, gegebenenfalls mittels eines Handhabungsgeräts, das Frontendmodul gegenüber der Karosserie positionieren. Zum Beispiel drückt ein Werker dabei den Scheinwerfer bzw. das Frontendmodul soweit in Richtung der Karosserie, dass die jeweiligen Ausrichtelemente aneinander anliegen, wodurch die Endmontageposition erreicht wird.

Vorzugsweise sind die miteinander korrespondierenden Ausrichtelemente derart ausgebildet, dass sämtliche, im vormontierten Zustand des Frontscheinwerfers am Frontmodul noch vorhandenen Bewegungsfreiheitsgrade nach dem Anordnen des Frontendmoduls zusammen mit dem an diesem über die Haltevorrichtung relativ zum Frontendmodul bewegbar gehaltenen Frontscheinwerfer an der Karosserie beschränkt sind. Mit anderen Worten sind die korrespondierenden Ausrichtelemente derart ausgebildet, dass sobald der Frontscheinwerfer in seiner Endmontageposition an der Karosserie angebracht worden ist, zumindest im Wesentlichen keinerlei Relativbewegung mehr zwischen dem Frontscheinwerfer und dem Frontmodul und auch keinerlei Relativbewegung mehr zwischen dem Frontscheinwerfer und der Karosserie möglich ist, wobei ein entsprechend vorgegebenes Fugenbild realisiert ist.

Die Haltevorrichtung, mittels welcher der Frontscheinwerfer am Frontendmodul relativ zu diesem bewegbar gehaltert wird, kann nach dem Festlegen des Frontscheinwerfers in dessen Endmontagestellung, d.h. nach Schritt c) entfernt, d.h. von dem Frontendmodul entfernt werden. Hierbei wird die Haltevorrichtung also nicht auch dazu verwendet, den Frontscheinwerfer in dessen Endmontagestellung zu haltern. Das Halten des Frontscheinwerfers in dessen Endmontagestellung erfolgt somit mittels einer von der Haltevorrichtung unterschiedlichen Fixiereinrichtung.

Bei einer besonders vorteilhaften Ausführungsform der Erfindung ist es jedoch vorgesehen, dass die Haltevorrichtung auch zum Halten des Frontscheinwerfers in dessen Endmontagestellung verwendet wird. Die Haltevorrichtung wird somit auch als Fixiereinrichtung verwendet. Dadurch kann die Komplexität des Verfahrens, insbesondere die Anzahl an Verfahrensschritten, gering gehalten werden.

Ein zweiter Aspekt der Erfindung betrifft eine Halteanordnung eines Frontscheinwerfers an einem Frontendmodul eines Personenkraftwagens. Bei der Halteanordnung ist der Frontscheinwerfer in einer Endmontageposition des Frontscheinwerfers am Frontendmodul über eine Haltevorrichtung gehalten.

Mit anderen Worten dient die Haltevorrichtung zum Halten des Frontscheinwerfers in dessen Endmontageposition am Frontendmodul. In wenigstens einer Vormontageposition des Frontscheinwerfers ist dieser mittels der Haltevorrichtung am Frontendmodul relativ zu diesem bewegbar zu halten. Dies bedeutet, dass der Frontscheinwerfer in seiner Vormontageposition, in der er mittels der Haltevorrichtung am Frontendmodul gehalten ist, noch relativ zum Frontendmodul bewegt und somit ausgerichtet und beispielsweise in die Endmontageposition relativ zum Frontendmodul bewegt werden kann.

Befindet sich der Frontscheinwerfer in seiner gewünschten Endmontageposition, in der er beispielsweise mit einem am Frontendmodul angeordneten Anbauteil wie beispielsweise einer Stoßfängerverkleidung und/oder mit wenigstens einem an der Karosserie angeordneten Beplankungselement wie beispielsweise einer Seitenwand, insbesondere einem Kotflügel, wenigstens eine Fuge mit einem erwünschten Spaltmaß begrenzt, so kann er in der Endmontageposition festgelegt werden. Dann ist der Frontscheinwerfer in seiner Endmontageposition über die Haltevorrichtung am Frontendmodul gehalten und beispielsweise mittels wenigstens eines Befestigungselements, beispielsweise einer Schraube, fixiert. Die Haltevorrichtung ermöglicht es somit, den Frontscheinwerfer am Frontendmodul in der Vormontageposition vorzumontieren. Hierbei ist der Frontscheinwerfer am Frontendmodul gehalten, jedoch kann der Frontscheinwerfer noch relativ zum Frontendmodul bewegt werden. Vorteilhafte Ausgestaltungen des ersten Aspekts der Erfindung sind als vorteilhafte Ausgestaltungen des zweiten Aspekts der Erfindung anzusehen und umgekehrt.

Wird nun beispielsweise das Frontendmodul zusammen mit dem Frontscheinwerfer mit der Karosserie gefügt, das heißt an dieser montiert, wobei das Frontendmodul zusammen mit dem Frontscheinwerfer relativ zur Karosserie bewegt wird, so kann der Frontscheinwerfer beim Bewegen relativ zur Karosserie aus seiner Vormontageposition in seine Endmontageposition bewegt werden. Wird der Frontscheinwerfer beispielsweise in einem an der Karosserie vorgesehenen Aufnahmebereich angeordnet, so kann der Frontscheinwerfer - da er in seiner Vormontageposition auch relativ zum Frontendmodul bewegbar ist - in seine Endmontageposition bewegt werden, wenn der Frontscheinwerfer mit einem den Aufnahmebereich begrenzenden und an der Karosserie vorgesehenen Bauteil in Kontakt kommt. Die durch die Haltevorrichtung bereitgestellte bzw. ermöglichte Bewegbarkeit des Frontscheinwerfers bei seiner Montage ist beispielsweise dann und erst dann gegebenen, wenn die oben genannte Transportsicherung entfernt ist. Durch die erfindungsgemäße Halteanordnung ist somit eine Zentrierung oder eine Justage des Frontscheinwerfers bei dessen Montage realisierbar, so dass zeit- und kostenaufwändige sowie komplexe Einstellarbeiten zum Ausrichten des Frontscheinwerfers vermieden werden können. Darüber hinaus können übermäßige Krafteinleitungen in den Frontscheinwerfer und daraus resultierende Beschädigungen vermieden werden, da der am Frontendmodul relativ zu diesem bewegbar gehaltene Frontscheinwerfer derartigen Krafteinleitungen ausweichen kann.

Der genannte Aufnahmebereich kann beispielsweise durch die Karosserie selbst oder aber durch ein an der Karosserie gehaltenes Anbauteil wie beispielsweise ein Beplankungselement, insbesondere eine Seitenwand und insbesondere einen Kotflügel, zumindest bereichsweise begrenzt sein.

Da der Frontscheinwerfer am Frontendmodul relativ zu diesem bewegbar gehalten ist beziehungsweise zu halten ist, kann ein etwaiger und beispielsweise toleranzbedingter Versatz zwischen dem Frontscheinwerfer und dem den Aufnahmebereich zumindest teilweise begrenzenden Bauteil direkt durch den Frontscheinwerfer und das mit diesem zusammenwirkende Bauteil kompensiert werden, so dass eine Fuge mit einem erwünschten Spaltmaß zwischen dem Bauteil und dem Frontscheinwerfer eingestellt werden kann, wenn das Frontendmodul zusammen mit dem Frontscheinwerfer an der Karosserie montiert und dabei der Frontscheinwerfer in den Aufnahmebereich eingebracht wird.

Eine aufwändige Vorpositionierung des Frontscheinwerfers am Frontendmodul mittels einer Lehre kann vermieden werden, wodurch auch Prozesse zum Warten der Lehre und zum Überwachen von solchen Positioniervorgängen entfallen können. Darüber hinaus können Fugen zwischen dem Frontscheinwerfer und daran angrenzenden Bauteilen des Personenkraftwagens aufgrund von geringeren Montagetoleranzen verkleinert werden. Ferner ist eine prozesssichere Montage darstellbar.

Des Weiteren kann die Bildung eines Modulbauteils umfassend zumindest das Frontendmodul und den Frontscheinwerfer beibehalten werden, da der Frontscheinwerfer an dem Frontendmodul mittels der Haltevorrichtung vormontiert und in vormontiertem Zustand an der Karosserie angeordnet werden kann. Mit anderen Worten ist es möglich, das Frontendmodul zumindest im Wesentlichen zeitgleich zur Fertigung des übrigen Personenkraftwagens mit dem Frontscheinwerfer zu bestücken, dadurch ein vormontiertes Modulbauteil umfassend zumindest den Frontscheinwerfer und das Frontendmodul zu schaffen und das Modulbauteil schließlich im vormontierten Zustand mit der Karosserie zu fügen. Hierdurch kann eine zeit- und kostengünstige Herstellung des gesamten Personenkraftwagens realisiert werden.

Zur Realisierung einer besonders präzisen und einfachen Ausrichtung des Frontscheinwerfers ist erfindungsgemäß vorgesehen , dass am Frontscheinwerfer wenigstens ein erstes Ausrichtelement vorgesehen ist, mittels welchem der Frontscheinwerfer unter Zusammenwirken des ersten Ausrichtelements mit einem der Karosserie des Personenkraftwagens zugeordneten, zweiten Ausrichtelement relativ zum Frontendmodul und zur Karosserie auszurichten ist. Dies bedeutet, dass das zweite Ausrichtelement direkt an der Karoserie selbst, an einem an der Karosserie angeordneten Bauteil angeordnet oder das Bauteil selbst ist. Bei dem zweiten Ausrichtelement kann es sich somit um ein an der Karosserie angeordnetes Bauteil wie beispielsweise ein Beplankungselement, insbesondere eine Seitenwand und insbesondere einen Kotflügel, handeln. Das am Frontscheinwerfer vorgesehene Ausrichtelement ist beispielsweise ein mit dem Frontscheinwerfer oder mit einem Bauteil des Frontscheinwerfers einstückig ausgebildetes Bauteil oder ein separat vom Frontscheinwerfer ausgebildetes und an diesem befestigtes Bauteil.

Zum Montieren des Frontendmoduls zusammen mit dem Frontscheinwerfer an der Karosserie werden diese relativ zur Karosserie auf die Karosserie zu bewegt. Hierbei werden die beiden Ausrichtelemente in Zusammenwirken gebracht. Werden dann das Frontendmodul und der Frontscheinwerfer weiter relativ zur Karosserie bewegt, so geht damit eine Relativbewegung der Ausrichtelemente zueinander einher, wobei mittels der Ausrichtelemente eine präzise Bewegung beziehungsweise Ausrichtung des Frontscheinwerfers relativ zum Frontendmodul und relativ zur Karosserie bewirkt wird. Dadurch wird der Frontscheinwerfer beispielsweise auf besonders einfache Weise aus seiner Vormontageposition in seine Endmontageposition bewegt, ohne dass aufwändige Nacharbeiten erforderlich wären.

Erfingungsgemäß weist die Haltevorrichtung wenigstens ein Gelenk auf, mittels welchem der Frontscheinwerfer in seiner Vormontageposition relativ zum Frontendmodul verschwenkbar ist. Dabei ist der Frontscheinwerfer beispielsweise um eine zumindest im Wesentlichen in Fahrzeughochrichtung verlaufende Schwenkachse verschwenkbar. Durch diese Verschwenkbarkeit des Frontscheinwerfers können etwaige, toleranzbedingte Versätze zwischen dem Frontscheinwerfer und dem Frontendmodul und/oder zwischen dem Frontscheinwerfer und der Karosserie beziehungsweise an der Karosserie gehaltenen Bauteilen auf besonders einfache Weise kompensiert werden. Mittels des Gelenks ist der Frontscheinwerfer - wie im Zusammenhang mit dem Verfahren beschrieben - beispielsweise um die y-Richtung verschwenkbar

Erfindungsgemäß umfasst die Haltevorrichtung wenigstens ein Halteelement, mittels welchem der Frontscheinwerfer in seiner Vormontageposition relativ zum Frontendmodul, insbesondere in y-Richtung, verschiebbar am Frontendmodul gehalten ist. Dies bedeutet, dass der Frontscheinwerfer in seinem am Frontendmodul gehaltenen beziehungsweise vormontierten Zustand relativ zum Frontendmodul in wenigstens eine Richtung verschiebbar ist, wodurch Toleranzen besonders gut und präzise kompensiert werden können. Durch die Verschwenkbarkeit und die Verschiebbarkeit des Frontscheinwerfers ist es somit möglich, Fugen mit einem nur sehr geringen Spaltmaß zwischen dem Frontscheinwerfer und wenigstens einem an den Frontscheinwerfer angrenzenden Bauteil des Personenkraftwagens auf einfache Weise realisieren zu können.

Eine weitere Ausführungsform zeichnet sich dadurch aus, dass die Haltevorrichtung wenigstens ein an dem Frontscheinwerfer vorgesehenes, erstes Positionierungselement und wenigstens ein damit korrespondierendes und am Frontendmodul vorgesehenes, zweites Positionierungselement umfasst. Mittels der Positionierungselemente ist die Bewegung des Frontscheinwerfers relativ zum Frontendmodul begrenzbar. Mit anderen Worten lassen die Positionierungselemente eine Bewegung des Frontscheinwerfers relativ zum Frontendmodul und somit relativ zur Karosserie zu, jedoch verhindern sie eine übermäßige Bewegung. Hierdurch kann der Frontscheinwerfer besonders sicher am Frontendmodul gehalten und vorpositioniert werden, so dass der Frontscheinwerfer beispielsweise über das Frontendmodul bewegt und insbesondere transportiert werden kann, ohne dass sich der Frontscheinwerfer unerwünschterweise vom Frontendmodul löst. Ferner lassen die Positionierungselemente die Bewegung des Frontscheinwerfers relativ zur Karosserie und relativ zum Frontendmodul beim Montieren des Frontendmoduls zu, so dass die Toleranzen und Versätze auf einfache Weise ausgeglichen werden können.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:

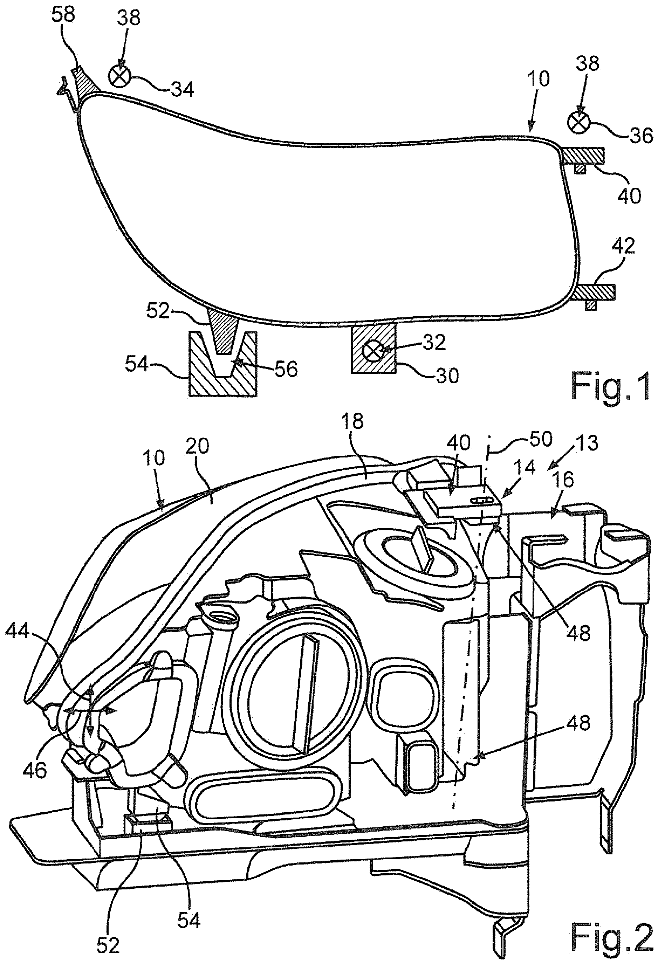

- Fig. 1: eine schematische Vorderansicht eines Frontscheinwerfers gemäß einer ersten Ausführungsform für einen Personenkraftwagen, welcher in einer Endmontageposition am Frontendmodul über eine Haltevorrichtung zu halten ist, mittels welcher der Frontscheinwerfer in wenigstens einer Vormontageposition am Frontendmodul relativ zum Frontendmodul bewegbar zu halten ist;
- Fig. 2: ausschnittsweise eine schematische und perspektivische Rückansicht des Frontscheinwerfers gemäß einer zweiten Ausführungsform, welcher in seiner Vormontageposition über die Haltevorrichtung an einem korrespondierenden Halteelement des Frontendmoduls relativ zum Frontendmodul bewegbar gehalten ist; und

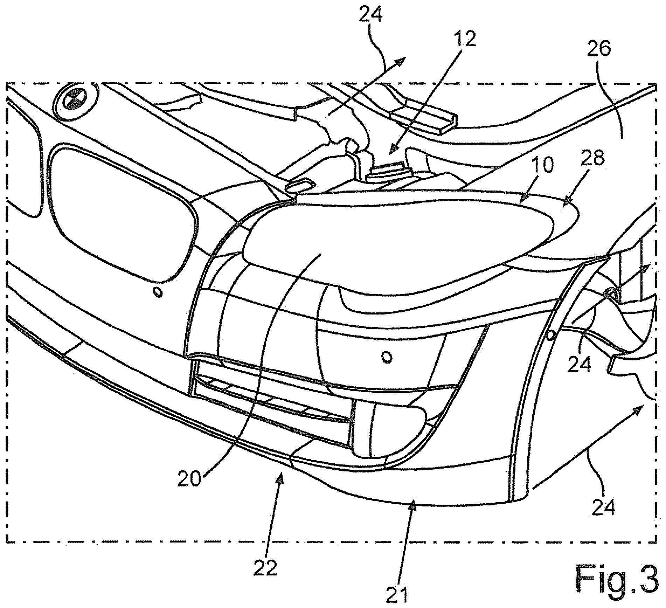

- Fig. 3: ausschnittsweise eine schematische und perspektivische Vorderansicht eines Modulbauteils umfassend das Frontendmodul und den Frontscheinwerfer bei der Montage des Modulbauteils an der Karosserie des Personenkraftwagens, bei der aufgrund der Bewegbarkeit des am Frontendmodul gehaltenen Scheinwerfers eine Justage des Frontscheinwerfers erfolgen kann, in deren Rahmen der Frontscheinwerfer relativ zum Frontendmodul und/oder relativ zur Karosserie bewegt wird.

In den Figuren sind gleiche oder funktionsgleiche Elemente mit gleichen Bezugszeichen versehen.

Fig. 1 zeigt einen im Ganzen mit 10 bezeichneten Frontscheinwerfer gemäß einer ersten Ausführungsform für einen Personenkraftwagen. Im Rahmen einer aus Fig. 3 erkennbaren Halteanordnung - wobei Fig. 2 und 3 den Frontscheinwerfer 10 gemäß einer zweiten Ausführungsform zeigen - wird der Frontscheinwerfer 10 mittels einer aus Fig. 2 erkennbaren und im Ganzen mit 13 bezeichneten Haltevorrichtung an einem mit 12 bezeichneten Frontendmodul (Fig. 3) gehaltert. Mit anderen Worten wird das Frontendmodul 12 mit dem Frontscheinwerfer 10 bestückt. Hierzu ist ein mit dem Frontscheinwerfer 10 korrespondierendes und aus Fig. 2 erkennbares Halteelement 16 des Frontendmoduls 12 vorgesehen, an weichem der Frontscheinwerfer 10 gehalten wird. Der Frontscheinwerfer 10 umfasst ein Gehäuse 18 und eine mit dem Gehäuse 18 verbundene Scheibe 20, welche üblicherweise auch als Streuscheibe bezeichnet wird. Das Halteelement 16 ist Bestandteil der Haltevorrichtung 13. Mit anderen Worten umfasst die Haltevorrichtung das Halteelement 16. Die Haltevorrichtung 13 umfasst darüber hinaus eine am Frontscheinwerfer 10 vorgesehene Halteeinrichtung 14.

Das Frontendmodul 12 umfasst beispielsweise wenigstens einen aus Fig. 3 nicht erkennbaren Träger, an dem das Halteelement 16 befestigt ist. An dem Träger und/oder an einem anderen Träger des Frontendmoduls 12 wird auch eine aus Fig. 3 erkennbare Stoßfängerverkleidung 21 befestigt, mittels welcher ein sich zumindest im Wesentlichen in Fahrzeugquerrichtung erstreckender Biegequerträger eines Stoßfängers des Personenkraftwagens verkleidet ist, wobei der Stoßfänger umfassend den Biegequerträger und die Stoßfängerverkleidung 21 Bestandteil eines im Ganzen mit 22 bezeichneten Modulbauteils ist. Das Modulbauteil 22 umfasst somit den Stoßfänger mit der Stoßfängerverkleidung 21, den Frontscheinwerfer 10 sowie das Frontendmodul 12 sowie weitere Anbauteile. Das Modulbauteil 22 kann beispielsweise zeitgleich zur Fertigung des übrigen Personenkraftwagens und insbesondere zeitgleich zur Fertigung der Karosserie des Personenkraftwagens vormontiert werden und anschließend als vormontiertes Modulbauteil mit der Karosserie gefügt werden.

Eine Fügerichtung, in die das Modulbauteil 22 und somit das Frontendmodul 12 relativ zur Karosserie bewegt werden, um das Modulbauteil 22 mit der Karosserie zu fügen, ist in Fig. 3 durch Richtungspfeile 24 veranschaulicht. Diese Fügerichtung fällt dabei mit der Fahrzeuglängsrichtung (x-Richtung) zusammen und verläuft vorliegend von vorne nach hinten. Die Fügerichtung kann auch mit der Fahrzeugquerrichtung (y-Richtung) zusammenfallen oder in andere Richtungen verlaufen.

An der Karosserie ist auch eine Seitenwand in Form eines vorderen Kotflügels 26 befestigt. Bei dem Kotflügel 26 handelt es sich um ein Beplankungselement zum Verkleiden des Rohbaus. Wie aus Fig. 3 erkennbar ist, ist durch den Kotflügel 26 ein Aufnahmebereich 28 begrenzt, in welchen der Frontscheinwerfer 10 zumindest bereichsweise hineinbewegt wird, wenn das Frontendmodul 12 zusammen mit dem an diesem gehaltenen Frontscheinwerfer 10 in die Fügerichtung relativ zur Karosserie bewegt wird. Der Aufnahmebereich 28 könnte alternativ durch ein am Kotflügel 26 gehaltenes Anbauteil begrenzt sein, wobei das Anbauteil nach der Montage des Frontscheinwerfers 10 beispielsweise vom Kotflügel 26 entfernt werden könnte.

Um den Frontscheinwerfer an dem Frontendmodul 12 zu befestigen, ist ein aus Fig. 1 erkennbares, erstes Befestigungselement 30 vorgesehen. Bei dem Befestigungselement 30 handelt es sich beispielsweise um eine Lasche mit einer Durchgangsöffnung 32, wodurch ein Schraubpunkt bereitgestellt ist. Über das Befestigungselement 30 kann der Frontscheinwerfer 10 mit dem Frontendmodul 12 in x-Richtung verschraubt werden. Bei Frontscheinwerfern mit großen Abmessungen und/oder hohem Gewicht können auch mehrere Befestigungselemente vorgesehen werden. Dies erfolgt beispielsweise nach der Montage des Frontendmoduls 12 an der Karosserie. Das Befestigungselement 30 kann ein Toleranzausgleichselement umfassen, um beispielsweise fertigungsbedingte Toleranzen und Versätze kompensieren zu können.

In Fig. 1 sind auch besonders schematisch Befestigungselemente 34, 36 gezeigt, welche ebenfalls dazu dienen, den Frontscheinwerfer 10 am Frontendmodul 12 zu befestigen, vorzugsweise dann, wenn der Personenkraftwagen bereits auf seinen eigenen Rädern steht. Die Befestigungselemente 34, 36 weisen jeweils eine Schrauböffnung 38 auf. Dadurch ist durch die Befestigungselemente 34, 36 ein jeweiliger Schraubpunkt bereitgestellt, so dass der Frontscheinwerfer mit dem Frontendmodul 12 verschraubt werden kann. Das Befestigungselement 34 ermöglicht beispielsweise die Verschraubung in Fahrzeughochrichtung (z-Richtung), wobei das Befestigungselement 34 ein Toleranzausgleichselement aufweisen kann oder nicht. Im Gegensatz dazu ermöglicht das Befestigungselement 36 die Verschraubung des Frontendmoduls 12 mit der Karosserie in Fahrzeughochrichtung (z-Richtung), wobei das Befestigungselement 36 ein Toleranzausgleichselement aufweisen kann oder nicht.

Die Halteeinrichtung 14 umfasst Halteelemente 40, 42, welche am Frontscheinwerfer 10 vorgesehen sind und mittels welchen der Frontscheinwerfer 10 am Halteelement 16 und über dieses am Frontendmodul 12 zu haltern ist. Die Halteeinrichtung 14 umfasst beispielsweise auch mit den Halteelementen 40, 42 korrespondierende und am Frontendmodul 12, insbesondere am Halteelement 16, vorgesehene Halteelemente zum Haltern des Frontscheinwerfers 10 am Frontendmodul 12.

Der Frontscheinwerfer 10 ist dabei in einer Endmontageposition des Frontscheinwerfers 10 am Frontendmodul 12 über die Haltevorrichtung 13 (Halteeinrichtung 14 und Halteelement 16) gehalten. Mit anderen Worten ermöglicht die Haltevorrichtung 13 die Halterung des Frontscheinwerfers 10 am Frontendmodul 12 in einer Endmontageposition des Frontscheinwerfers 10. Mittels der Haltevorrichtung 13 ist der Frontscheinwerfer 10 auch in wenigstens einer Vormontageposition am Frontendmodul 12 relativ zu diesem bewegbar zu halten. Diese Vormontageposition ist in Fig. 2 und 3 dargestellt. Mit anderen Worten ist der Frontscheinwerfer 10 in seiner Vormontageposition am Frontendmodul 12 über die Haltevorrichtung 13 gehalten, wobei der Frontscheinwerfer 10 in diesem, am Frontendmodul 12 gehaltenen Zustand relativ zum Frontendmodul 12 bewegt werden kann. Dies bedeutet, dass die Haltevorrichtung 13 eine Bewegung des Frontscheinwerfers 10 relativ zum Frontendmodul 12 und somit relativ zur Karosserie zulässt, obwohl der Frontscheinwerfer 10 bereits am Frontendmodul 12 gehalten und somit an diesem vormontiert ist.

Durch diese Bewegbarkeit des Frontscheinwerfers 10 in seinem am Frontendmodul 12 gehaltenen Zustand können Toleranzen und Versätze des Frontscheinwerfers 10 relativ zur Karosserie und insbesondere zum an der Karosserie gehaltenen Kotflügel 26 ausgeglichen werden. Das Halteelement 40 ermöglicht dabei beispielsweise eine Ausrichtung des Frontscheinwerfers 10, das heißt eine Bewegung dieses relativ zum Frontendmodul 12 und relativ zur Karosserie beziehungsweise zum Kotflügel 26 in Fahrzeuglängsrichtung und in Fahrzeughochrichtung, wobei das Halteelement 42 eine Ausrichtung des Frontscheinwerfers 10 in Fahrzeuglängsrichtung ermöglicht. Dies bedeutet, dass der Frontscheinwerfer 10 in seiner Vormontageposition relativ zum Frontendmodul 12 in Fahrzeugquerrichtung und in Fahrzeughochrichtung verschoben werden kann, was in Fig. 2 durch Richtungspfeile 44, 46 veranschaulicht ist.

Darüber hinaus weist die Halteeinrichtung 14 Drehgelenke 48 auf, welche ein Verschwenken des Frontscheinwerfers 10 relativ zum Frontendmodul 12 in der Vormontageposition des Frontscheinwerfers 10 um eine Schwenkachse 50 zulassen. Dies bedeutet, dass der Frontscheinwerfer 10 nicht nur relativ zum Frontendmodul 12 und relativ zum Kotflügel 26 verschoben, sondern auch verschwenkt werden kann.

Die Halteeinrichtung 14 umfasst darüber hinaus ein am Frontscheinwerfer 10 vorgesehenes, erstes Positionierungselement 52 sowie wenigstens ein damit korrespondierendes und am Frontendmodul 12 vorgesehenes, zweites Positionierungselement 54. Das zweite Positionierungselement 54 weist eine Aufnahme 56 für das erste Positionierungselement 52 auf. Die Aufnahme 56 ist dabei durch schräg zueinander verlaufende Flächen des zweiten Positionierungselements 54 begrenzt, wobei die schräg zueinander verlaufenden Flächen des zweiten Positionierungselements 54 mit schräg zueinander verlaufenden Flächen des ersten Positionierungselements 52 zusammenwirken können. Die jeweiligen, schräg zueinander verlaufenden Flächen wirken als Einführschrägen, so dass der Frontscheinwerfer 10 in Fahrzeuglängsrichtung, Fahrzeugquerrichtung und Fahrzeughochrichtung positioniert wird, wenn das erste Positionierungselement 52 in die Aufnahme 56 hineinbewegt wird. Durch diese Vorpositionierung kann der Frontscheinwerfer 10 in seinem am Frontendmodul 12 vorpositionierten Zustand sicher mit dem Frontendmodul 12 mitbewegt und dadurch transportiert werden.

Beim Fügen des Frontendmoduls 12 mit der Karosserie lassen die Positionierungselemente 52, 54 vorzugsweise eine Bewegung des Frontscheinwerfers 10 relativ zum Frontendmodul 12 und relativ zum Kotflügel 26 in vorgebbaren Grenzen zu. Werden das Frontendmodul 12 und mit diesem der Frontscheinwerfer 10 in die Fügerichtung bewegt, um das Frontendmodul 12 mit der Karosserie zu fügen, so wird der Frontscheinwerfer 10 zumindest teilweise in den Aufnahmebereich 28 hineinbewegt. Dabei lassen die Drehgelenke und die Halteelemente 40, 42 eine Bewegung, das heißt ein Verschwenken sowie ein Verschieben des Frontscheinwerfers 10 zu, wenn der Frontscheinwerfer 10 beispielsweise leicht in Kontakt mit dem den Aufnahmebereich 28 begrenzenden Kotflügel 26 kommt. Hierdurch ist eine kraft- und/oder formschlüssige Ausrichtung des Frontscheinwerfers 10 relativ zur Karosserie realisierbar, welche mit dem Bewegen des Frontendmoduls 12 und des Frontscheinwerfers 10 relativ zur Karosserie einhergeht.

Zusätzlich dazu ist am Frontscheinwerfer 10 wenigstens ein Ausrichtelement 58 (Fig. 1) vorgesehen, welches beim Anordnen des Frontendmoduls 12 an der Karosserie in Zusammenwirken mit einem an der Karosserie vorgesehenen beziehungsweise an der Karosserie gehaltenen, zweiten Ausrichtelement gebracht wird.

Mittels dieser Ausrichtelemente wird der Frontscheinwerfer 10 bei seiner Bewegung relativ zur Karosserie ausgerichtet und insbesondere relativ zum Kotflügel 26 positioniert, wobei diese Positionierung beziehungsweise Ausrichtung beispielsweise kraft- und/oder formschlüssig mittels der zusammenwirkenden Ausrichtelemente erfolgt. Als ein solches Ausrichtelement kann beispielsweise ein Pin beziehungsweise ein Bolzen, eine Kugel oder ein anderes Ausrichtelement genutzt werden.

Durch das Zusammenwirken der Ausrichtungselemente wird ein Spaltmaß einer Fuge beispielsweise zwischen dem Frontscheinwerfer 10 und dem Kotflügel 26 eingestellt, ohne dass zeit- und kostenaufwändige Nacharbeiten erforderlich wären. Alternativ oder zusätzlich kann dadurch ein Spaltmaß einer Fuge zwischen dem Frontscheinwerfer 10 und der Stoßfängerverkleidung 21 und/oder ein Spaltmaß einer Fuge zwischen dem Frontscheinwerfer 10 und einer in den Figuren nicht dargestellten Fronthaube in Form einer Motorhaube in deren Schließstellung eingestellt werden.

Durch die Ausrichtung wird der Frontscheinwerfer 10 in seine Endmontagestellung bewegt, in der er schließlich am Frontendmodul 12 und/oder an der Karosserie festgelegt wird. Dieses Festlegen kann beispielsweise durch Verschraubungen erfolgen. Das Festlegen des Frontscheinwerfers 10 in seiner Endmontagestellung kann dabei unabhängig von einer Prozessstruktur erfolgen. Dadurch kann der Eintrag von Spannungen in den Frontscheinwerfer 10 gering gehalten werden. Darüber hinaus kann dadurch ein besonders vorteilhaftes Fugenbild mit einem gleichmäßigen Spaltmaß realisiert werden.

Die Montage des Frontscheinwerfers 10 erfolgt beispielsweise derart, dass der Frontscheinwerfer 10 zunächst über die Halteeinrichtung 14, insbesondere die Halteelemente 40, 42, am Frontendmodul 12 eingehängt wird. Das Halteelement 40 und/oder 42 wird beispielsweise in ein Langloch eingesteckt, welches sich in Fahrzeugquerrichtung (y-Richtung) erstreckt. In diesem Zustand ist der Frontscheinwerfer 10 maßhaltig in Fahrzeughochrichtung (z-Richtung) und in Fahrzeuglängsrichtung (x-Richtung) am Frontendmodul gehalten, kann aber noch bewegt werden. Der Frontscheinwerfer 10 kann dabei noch in y-Richtung verschoben, um die x-Richtung verkippt und um die z-Richtung verschwenkt werden. Ferner könnte der Frontscheinwerfer 10 in z-Richtung nach oben vom Frontendmodul 12 abgehoben werden. Zunächst sind also nur drei von sechs Freiheitsgraden eingeschränkt.

Zur Einschränkung eines vierten Freiheitsgrad wird der Frontscheinwerfer 10, beispielsweise mittels eines Halters, derart festgelegt, dass er in z-Richtung fixiert ist und auch nach oben nicht mehr abgehoben werden kann. Schließlich erfolgt eine weitere Fixierung in x-Richtung, so dass er nicht mehr um die z-Richtung verschwenkt werden kann. In diesem Zustand könnte der Frontscheinwerfer 10 nur noch in y-Richtung verschoben werden. Um den Frontscheinwerfer in seiner Montagestellung festzulegen, wird auch der sechste und letzte Freiheitsgrad eingeschränkt, so dass der Frontscheinwerfer 10 auch nicht mehr in y-Richtung verschoben werden kann. Hierdurch ist zunächst eine einfache Ausrichtung des Frontscheinwerfers 10 relativ zum Frontendmodul 12 und zur Karosserie möglich, woraufhin der Frontscheinwerfer 10 sicher befestigt wird.

## Patentansprüche

1. Verfahren zum Montieren eines Frontendmoduls (12) und wenigstens eines Frontscheinwerfers (10) an einer Karosserie eines Personenkraftwagens, mit den Schritten:
a) Haltern des Frontscheinwerfers (10) in wenigstens einer Vormontageposition an dem Frontendmodul (12) über eine Haltevorrichtung (13), mittels welcher der Frontscheinwerfer (10) am Frontendmodul (12) relativ zu diesem bewegbar gehalten ist;
b) Anordnen des Frontendmoduls (12) zusammen mit dem an diesem über die Haltevorrichtung (13) relativ zum Frontendmodul (12) bewegbar gehaltenen Frontscheinwerfer (10) an der Karosserie, wobei das Frontendmodul (12) und mit diesem der Frontscheinwerfer (10) relativ zur Karosserie bewegt werden; und
c) Festlegen des Frontscheinwerfers (10) in einer Endmontagestellung,
wobei
in Schritt b) wenigstens ein am Frontscheinwerfer (10) vorgesehenes, erstes Ausrichtelement (58) mit einem der Karosserie des Personenkraftwagens zugeordneten, zweiten Ausrichtelement in Zusammenwirken gebracht wird, wobei der Frontscheinwerfer (10) mittels der zusammenwirkenden Ausrichtelemente (58) beim Bewegen des Frontscheinwerfers (10) relativ zur Karosserie in eine Endmontageposition, relativ zur Karosserie und relativ zum Frontendmodul (12) bewegt wird,
**dadurch gekennzeichnet, dass**
die Haltevorrichtung (13) wenigstens ein Gelenk (48) aufweist, mittels welchem der Frontscheinwerfer (10) in seiner Vormontageposition relativ zum Frontendmodul (12) verschwenkt wird,
wobei
die Haltevorrichtung (13) wenigstens ein Halteelement (40, 42) umfasst, mittels welchem der Frontscheinwerfer (10) in seiner Vormontageposition relativ zum Frontendmodul (10) verschiebbar am Frontendmodul (12) gehalten ist.

2. Verfahren nach Anspruch 1,
**dadurch gekennzeichnet, dass**
die Haltevorrichtung (13) auch zum Halten des Frontscheinwerfers (10) in dessen Endmontagestellung verwendet wird.

3. Halteanordnung eines Frontscheinwerfers (10) an einem Frontendmodul (12) für einen Personenkraftwagen, bei welcher der Frontscheinwerfer (10) in einer Endmontageposition am Frontendmodul (12) über eine Haltevorrichtung (13) gehalten ist, mittels welcher der Frontscheinwerfer (10) in wenigstens einer Vormontageposition am Frontendmodul (12) relativ zu diesem bewegbar zu halten ist, wobei
am Frontscheinwerfer (10) wenigstens ein erstes Ausrichtelement (58) vorgesehen ist, mittels welchem der Frontscheinwerfer (10) unter Zusammenwirken des ersten Ausrichtelements (58) mit einem der Karosserie des Personenkraftwagens zugeordneten, zweiten Ausrichtelement relativ zum Frontendmodul (12) und zur Karosserie auszurichten ist,
**dadurch gekennzeichnet, dass**
die Haltevorrichtung (13) wenigstens ein Gelenk (48) aufweist, mittels welchem der Frontscheinwerfer (10) in seiner Vormontageposition relativ zum Frontendmodul (12) verschwenkbar ist, wobei
die Haltevorrichtung (13) wenigstens ein Halteelement (40, 42) umfasst, mittels welchem der Frontscheinwerfer (10) in seiner Vormontageposition relativ zum Frontendmodul (10) verschiebbar am Frontendmodul (12) gehalten ist.

4. Halteanordnung nach Anspruch 3,
**dadurch gekennzeichnet, dass**
die Haltevorrichtung (13) wenigstens ein am Frontscheinwerfer (10) vorgesehenes, erstes Positionierungselement (52) und wenigstens ein damit korrespondierendes und am Frontendmodul (12) vorgesehenes, zweites Positionierungselement (54) umfasst, mittels welchen die Bewegung des Frontscheinwerfers (10) in seiner Vormontageposition relativ zum Frontendmodul (12) begrenzbar ist.

## Claims

1. Method for assembling a front end module (12) and at least one headlight (10) on a body of a passenger motor vehicle, said method comprising the following steps:
a) holding the headlight (10) by way of a holding device (13) in at least one preliminary assembling position on the front end module (12), the headlight (10) by way of said holding device (13) being held on the front end module (12) so as to be movable relative to the latter;
b) disposing the front end module (12) conjointly with the headlight (10), the latter by way of the holding device (13) being held on said front end module (12) so as to be movable relative to the front end module (12), on the body, wherein the front end module (12) and therewith the headlight (10) are moved relative to the body; and
c) securing the headlight (10) in a final assembly position;
wherein
in step b) at least one first alignment element (58) provided on the headlight (10) is brought to interact with a second alignment element assigned to the body of the passenger motor vehicle, wherein the headlight (10), when moving the headlight (10) relative to the body, by means of the interacting alignment elements (58) is moved relative to the body and relative to the front end module (12) to a final assembly position,
**characterized in that**
the holding device (13) has at least one articulation (48) by means of which the headlight (10) in the preliminary assembly position thereof is pivoted relative to the front end module (12); wherein
the holding device (13) comprises at least one holding element (40, 42) by means of which the headlight (10) in the preliminary assembly position thereof is held on the front end module (12) so as to be displaceable relative to the front end module (10) .

2. Method according to Claim 1,
**characterized in that**
the holding device (13) is also used for holding the headlight (10) in the final assembly position thereof.

3. Holding assembly of a headlight (10) on a front end module (12) for a passenger motor vehicle, in which holding assembly the headlight (10) is held in a final assembly position on the front end module (12) by way of a holding device (13) by means of which the headlight (10) is to be held in at least one preliminary assembly position on the front end module (12) so as to be movable relative to the latter; wherein
at least one first alignment element (58) is provided on the headlight (10), by means of which first alignment element (58) the headlight (10), in an interaction between the first alignment element (58) and a second alignment element assigned to the body of the passenger motor vehicle, is to be aligned relative to the front end module (12) and relative to the body,
**characterized in that**
the holding device (13) has at least one articulation (48) by means of which the headlight (10) in the preliminary assembly position thereof is pivotable relative to the front end module (12), wherein
the holding device (13) comprises at least one holding element (40, 42) by means of which the headlight (10) in the preliminary assembly position thereof is held on the front end module (12) so as to be displaceable relative to the front end module (10) .

4. Holding assembly according to Claim 3,
**characterized in that**
the holding device (13) comprises at least one first positioning element (52) that is provided on the headlight (10) and, corresponding thereto, at least one second positioning element (54) that is provided on the front end module (12), the movement of the headlight (10) in the preliminary assembly position thereof relative to the front end module (12) being able to be limited by said positioning elements (52, 54) .

## Revendications

1. Procédé de montage d'un module d'extrémité avant (12) et d'au moins un phare avant (10) sur une carrosserie d'une voiture particulière, comprenant les étapes consistant à :
a) retenir le phare avant (10) dans au moins une position de prémontage sur le module d'extrémité avant (12) par l'intermédiaire d'un dispositif de retenue (13) au moyen duquel le phare avant (10) est maintenu sur le module d'extrémité avant (12) de manière mobile par rapport à celui-ci ;
b) disposer sur la carrosserie le module d'extrémité avant (12) conjointement avec le phare avant (10) retenu sur celui-ci de manière à pouvoir être déplacé par rapport au module d'extrémité avant (12) par l'intermédiaire du dispositif de retenue (13), le module d'extrémité avant (12), et avec celui-ci le phare avant (10), étant déplacés par rapport à la carrosserie ; et
c) immobiliser le phare avant (10) dans une position de montage final,
dans lequel,
à l'étape b), au moins un premier élément d'alignement (58) prévu sur le phare avant (10) est amené à coopérer avec un deuxième élément d'alignement associé à la carrosserie de la voiture particulière, le phare avant (10) étant déplacé par rapport à la carrosserie et par rapport au module d'extrémité avant (12) au moyen des éléments d'alignement (58) coopérant lors du déplacement du phare avant (10) par rapport à la carrosserie dans une position de montage final,
**caractérisé en ce que** le dispositif de retenue (13) présente au moins une articulation (48) au moyen de laquelle le phare avant (10) est amené à pivoter dans sa position de prémontage par rapport au module d'extrémité avant (12),
dans lequel le dispositif de retenue (13) comprend au moins un élément de retenue (40, 42) au moyen duquel le phare avant (10) est retenu dans sa position de prémontage par rapport au module d'extrémité avant (10) de manière à pouvoir coulisser sur le module d'extrémité avant (12).

2. Procédé selon la revendication 1, **caractérisé en ce que** le dispositif de retenue (13) est aussi utilisé pour retenir le phare avant (10) dans sa position de montage final.

3. Ensemble de retenue d'un phare avant (10) sur un module d'extrémité avant (12) pour une voiture particulière, dans lequel le phare avant (10) est retenu dans une position de montage final sur le module d'extrémité avant (12) par l'intermédiaire d'un dispositif de retenue (13) au moyen duquel le phare avant (10) doit être retenu dans au moins une position de prémontage sur le module d'extrémité avant (12) de manière mobile par rapport à celui-ci, dans lequel
sur le phare avant (10), au moins un premier élément d'alignement (58) est prévu au moyen duquel le phare avant (10) doit être aligné par rapport au module d'extrémité avant (12) et à la carrosserie, par la coopération du premier élément d'alignement (58) avec un deuxième élément d'alignement associé à la carrosserie de la voiture particulière,
**caractérisé en ce que** le dispositif de retenue (13) présente au moins une articulation (48) au moyen de laquelle le phare avant (10) peut être amené à pivoter par rapport au module d'extrémité avant (12) dans sa position de prémontage, dans lequel
le dispositif de retenue (13) comprend au moins un élément de retenue (40, 42) au moyen duquel le phare avant (10) est retenu dans sa position de prémontage sur le module d'extrémité avant (12) de manière à pouvoir coulisser par rapport au module d'extrémité avant (10).

4. Ensemble de retenue selon la revendication 3, **caractérisé en ce que** le dispositif de retenue (13) comprend au moins un premier élément de positionnement (52) prévu sur le phare avant (10) et au moins un deuxième élément de positionnement (54) correspondant à celui-ci et prévu sur le module d'extrémité avant (12), au moyen duquel le déplacement du phare avant (10) dans la position de prémontage par rapport au module d'extrémité avant (12) peut être limité.
